# FASCICULE DE BREVET EUROPEEN

(11) **EP 3 121 375 B1**
(45) Date de publication et mention de la délivrance du brevet: **01.01.2020**
(21) Numéro de dépôt: 16179050.6
(22) Date de dépôt: 12.07.2016
(51) Int. Cl.: F01D 5/14, F01D 5/28, F01D 5/30, F04D 29/32, B64D 27/16, F04D 29/02, F04D 29/54

(54) **ARMATURE D'AUBE COMPOSITE DE COMPRESSEUR DE TURBOMACHINE AXIALE**
VERBUNDWERKSTOFFSCHAUFELARMATUR EINES KOMPRESSORS EINES AXIALEN TURBOTRIEBWERKS
COMPOSITE COMPRESSOR VANE ARMATURE OF AN AXIAL TURBOMACHINE

(30) Priorité: 22.07.2015 BE 201505469
(43) Date de publication de la demande: 25.01.2017
(73) Titulaire: SAFRAN AERO BOOSTERS S.A., 4041 Herstal (BE)
(72) Inventeur: ENGLEBERT, Eric, 4530 Villers-Le-Bouillet (BE)
(74) Mandataire: Lecomte & Partners

(56) Documents cités:
- EP-A1- 0 764 764
- EP-A1- 2 472 060
- EP-A2- 0 786 580
- EP-A2- 0 980 962
- EP-A2- 1 908 920

## Description

### Domaine technique

L'invention a trait à une aube renforcée de turbomachine. Plus précisément, l'invention se rapport à la rigidité d'une aube composite allégée de turbomachine axiale. L'invention a également trait à une turbomachine axiale, notamment un turboréacteur d'avion ou un turbopropulseur d'aéronef.

### Technique antérieure

Un turboréacteur assurant la propulsion d'un avion doit notamment respecter des contraintes de masse, de rendement, et de fiabilité. Son fonctionnement implique plusieurs rangées d'aubes rotoriques et statoriques, les rangées présentant couramment plus d'une centaine d'aubes. Les coûts de production et de conception de ces aubes pèsent significativement sur celui du turboréacteur.

Pour répondre au cahier des charges du turboréacteur, les aubes doivent être légères et robustes tout en respectant une géométrie prédéfinie. En particulier, elles doivent résister à l'érosion. Ce phénomène devient particulièrement critique dans un compresseur où les bords d'attaques d'aubes souffrent des ingestions. Un compromis prenant en compte ces contraintes consiste à réaliser une aube dont la pale forme un corps en matériau composite, et dont le bord d'attaque est blindé par un insert métallique.

Le document FR 3 011 269 A1 présente un moteur aéronautique avec des aubes de redresseur. Une aube présente une structure hybride, avec un bord d'attaque métallique et une pale en matériau composite. le bord d'attaque a une zone de fixation intérieure, et se prolonge par une nervure aval dans l'épaisseur de la pale composite. Une aube présente un bord de fuite métallique formant un ensemble monobloc avec le bord d'attaque. Cette conception permet d'optimiser la résistance de l'aube, mais pénalise sa masse. Le turboréacteur qui la reçoit subit ce poids. Dans le contexte d'un rotor, un tel type d'aubes pénalise en outre l'inertie du rotor. En fonctionnement, la force gyroscopique sollicite davantage les paliers, et la force centrifuge déforme le rotor.

Le document EP 2 472 060 A1 divulgue une pale composite de turbomachine. La pale comporte une armature avec une base d'où s'étendent une portion amont et une portion aval. La portion amont et la portion aval sont séparées par un évidement central.

Le document EP 1 908 920 A2 divulgue une aube en sortie de soufflante pour turboréacteur. L'aube renferme une armature enveloppée dans un matériau de revêtement. L'armature comporte une partie amont et une partie aval qui sont reliées par un membre de jonction.

### Résumé de l'invention

### Problème technique

L'invention a pour objectif de résoudre au moins un des problèmes posés par l'art antérieur. Plus précisément, l'invention a pour objectif d'alléger une aube de turbomachine tout en préservant sa rigidité.

### Solution technique

L'invention a pour objet une armature d'aube avec bord d'attaque de turbomachine, notamment de compresseur de turbomachine, l'armature étant monobloc et comprenant : une base d'aube destinée à être liée à un support de la turbomachine, une portion amont s'étendant depuis la base et formant le bord d'attaque de l'aube ; remarquable en ce qu'elle comprend en outre un raidisseur généralement situé en position centrale de la base, l'armature présentant un évidement qui sépare la portion amont du raidisseur et qui s'étend depuis la base sur la hauteur dudit raidisseur. La hauteur peut être mesurée perpendiculairement à la base.

Selon un mode avantageux de l'invention, le raidisseur s'étend depuis la base sur la majorité de la hauteur de la portion amont, préférentiellement sur la majorité de la hauteur de l'armature.

Selon un mode avantageux de l'invention, le raidisseur présente une pluralité d'orifices traversants, les d'orifices étant préférentiellement répartis sur sa hauteur.

Selon un mode avantageux de l'invention, le raidisseur forme une lame, éventuellement de largeur constante.

Selon un mode avantageux de l'invention, le raidisseur et la portion amont sont généralement parallèles, optionnellement ils présentent chacun une extrémité libre à l'opposé de la base.

Selon un mode avantageux de l'invention, la base est ou comprend un profil aérodynamique d'aube, ledit profil étant éventuellement cambré.

Selon un mode avantageux de l'invention, la base est ou comprend une plateforme de fixation, qui comprend éventuellement une portion de fixation s'étendant depuis la base vers l'opposé du raidisseur suivant la direction radiale de la turbomachine.

Selon un mode avantageux de l'invention, la base présente une extrémité aval, le raidisseur étant à distance de ladite extrémité aval.

Selon un mode avantageux de l'invention, l'armature est réalisée en métal, préférentiellement en titane, plus préférentiellement réalisée par fabrication additive à base de métal, notamment en poudre.

Selon un mode avantageux de l'invention, l'armature est une armature de turbomachine axiale, le bord d'attaque et le raidisseur étant destinés à s'étendre radialement au travers du flux primaire.

Selon un mode avantageux de l'invention, l'évidement traverse l'armature.

Selon un mode avantageux de l'invention, le raidisseur s'étend sur sensiblement toute la hauteur de la portion amont.

Selon un mode avantageux de l'invention, l'évidement s'étend ; éventuellement de manière continue ; sur sensiblement toute la hauteur du raidisseur, préférentiellement sur sensiblement toute la hauteur de la portion amont.

Selon un mode avantageux de l'invention, le raidisseur est en position centrale de la base suivant la longueur de la base et/ou suivant la direction de l'écoulement du fluide par rapport à l'aube, et/ou perpendiculairement au bord d'attaque.

Selon un mode avantageux de l'invention, le raidisseur est moins large que la portion amont.

Selon un mode avantageux de l'invention, les orifices présentent des profils en ellipses, l'allongement principal des ellipses étant perpendiculaire à la base.

Selon un mode avantageux de l'invention, la densité du matériau de l'armature est supérieure ou égale à 2,00, préférentiellement supérieure ou égale à 4,00.

Selon un mode avantageux de l'invention, le raidisseur est généralement situé axialement en position centrale de la base.

Selon un mode avantageux de l'invention, le bord d'attaque est destiné à être en contact d'un flux de la turbomachine, et/ou à former la surface extérieure de l'aube, notamment afin de séparer ledit ou un de la turbomachine.

L'invention a également pour objet une aube de turbomachine, notamment une aube de compresseur, l'aube comprenant une armature, remarquable en ce que l'armature est conforme à l'invention, préférentiellement l'aube comprend une pale destinée à dévier circonférentiellement un flux de la turbomachine, la pale comprenant un corps enveloppant le raidisseur.

L'aspect monobloc n'est pas indispensable à l'invention liée à l'aube, le raidisseur peut y être rapporté, notamment fixé ou encastré.

Selon un mode avantageux de l'invention, la portion amont s'étend sur la majorité de la hauteur de l'aube, et préférentiellement sur la majorité de l'épaisseur de l'aube.

Selon un mode avantageux de l'invention, le corps comprend un matériau polymère et/ou un matériau composite à matrice organique.

Selon un mode avantageux de l'invention, l'aube comprend un bord de fuite, une surface intrados et une surface extrados qui s'étendent du bord d'attaque au bord de fuite, le corps comprenant une enveloppe formant la surface intrados et la surface extrados, le bord de fuite étant éventuellement formé par ledit corps.

Selon un mode avantageux de l'invention, l'aube comprend une extrémité libre opposée à la base, le raidisseur étant à distance de ladite extrémité libre.

Selon un mode avantageux de l'invention, le corps forme un bloc amont isolant la portion amont du raidisseur, ledit bloc étant continu sur toute la hauteur de la pale.

Selon un mode avantageux de l'invention, la portion amont présente une gorge tournée vers le raidisseur, la gorge étant remplie par le corps.

Selon un mode avantageux de l'invention, la portion amont forme essentiellement une feuille d'épaisseur constante, la feuille présentant une face amont formant le bord d'attaque, et une face aval recouverte par le corps.

Selon un mode avantageux de l'invention, l'aube comprend un bord de fuite, le corps forme un bloc aval isolant le bord de fuite du raidisseur, ledit bloc étant continu toute le long du bord de fuite.

Selon un mode avantageux de l'invention, le corps présente un empilement radial de profils aérodynamiques d'aubes avec des lignes de cambrure moyennes, au moins une ou chaque ligne de cambrure moyenne étant disposée dans l'épaisseur du raidisseur.

Selon un mode avantageux de l'invention, le raidisseur est situé au niveau du centre de la corde de l'aube.

Selon un mode avantageux de l'invention, le raidisseur est à distance de la surface intrados et de la surface extrados, éventuellement au milieu entre ces surfaces.

Selon un mode avantageux de l'invention, la portion amont s'étend sur sensiblement toute la hauteur de l'aube, et éventuellement sur sensiblement toute l'épaisseur de l'aube.

Selon un mode avantageux de l'invention, la base forme une extrémité de l'aube et/ou est destinée à délimiter l'aube suivant sa hauteur.

Selon un mode avantageux de l'invention, la pale de l'aube est pleine.

Selon un mode avantageux de l'invention, le bloc amont occupe l'évidement de l'armature.

Selon un mode avantageux de l'invention, la densité de l'armature est supérieure à celle du matériau de la pale, préférentiellement au moins 30% plus dense, plus préférentiellement au moins 50% plus dense, éventuellement deux fois plus dense.

L'invention a également pour objet une d'aube de turbomachine axiale, notamment de compresseur de turbomachine, l'aube comprenant: une pale et une armature ; l'armature comportant : une base destinée à être liée à un support de la turbomachine et une portion amont s'étendant depuis la base et formant un bord d'attaque de l'aube ; remarquable en ce que l'armature comprend en outre un raidisseur enveloppé par la pale de l'aube de sorte à isoler le raidisseur de la portion amont, le raidisseur s'étendant préférentiellement depuis la base.

Selon un mode avantageux de l'invention, l'aube comprend un bord de fuite, le raidisseur étant à distance, notamment selon la corde de l'aube, du bord d'attaque et du bord de fuite.

L'invention a également pour objet une turbomachine, notamment une turbomachine axiale, comprenant une aube avec une armature, remarquable en ce que l'armature est conforme à l'invention, et/ou l'aube est conforme à l'invention, préférentiellement la turbomachine comprend un compresseur avec une aube conforme l'invention.

Selon un mode avantageux de l'invention, la turbomachine comprend un rotor, la base de l'aube étant liée audit rotor, la base étant éventuellement soudée audit rotor.

Selon un mode avantageux de l'invention, la turbomachine comprend au moins une rangée annulaire d'aubes, la rangée d'aubes comprenant des aubes conformes à l'invention, et des aubes monoblocs en métal et/ou des aubes monoblocs en matériau composite.

De manière générale, les modes avantageux de chaque objet de l'invention sont également applicables aux autres objets de l'invention. Dans la mesure du possible, chaque objet de l'invention est combinable aux autres objets.

### Avantages apportés

L'agencement de l'invention offre un compromis entre la raideur et la légèreté. Il s'appuie sur la complémentarité de l'armature et de la pale, l'une étant résistante et l'autre étant légère. La pale s'encastre dans l'armature en enveloppant le raidisseur central. L'aube peut être construite comme une voile de bateau : la pale devient une voilure tendue entre le bord d'attaque et le raidisseur central. Par conséquent, la pale est maintenue dans l'évidement grâce aux branches de l'armature ; c'est-à-dire la portion amont et le raidisseur ; et grâce à sa raideur intrinsèque. Cette raideur est également mise à profit pour que la pale conserve sa cambrure en aval du raidisseur central.

La portion amont et le raidisseur forment deux piliers qui se soutiennent mutuellement. En effet, leurs raideurs s'ajoutent grâce à la pale qui forme un lien rigide entre eux. Leurs profils différents présentent en outre des raideurs différentes selon les différents modes de torsion, si bien que leur réunion permet de bénéficier de leurs comportements complémentaires.

### Brève description des dessins

La figure 1 représente une turbomachine axiale selon l'invention.
La figure 2 est un schéma d'un compresseur de turbomachine selon l'invention.
La figure 3 illustre une aube avec une armature selon l'invention.
La figure 4 montre une coupe de l'aube selon l'invention suivant l'axe 4-4 tracé sur la figure 3.

### Description des modes de réalisation

Dans la description qui va suivre, les termes intérieur ou interne et extérieur ou externe renvoient à un positionnement par rapport à l'axe de rotation d'une turbomachine axiale. La direction axiale correspond à la direction le long de l'axe de rotation de la turbomachine. La direction radiale est perpendiculaire à l'axe de rotation. L'amont et l'aval sont en référence au sens d'écoulement principal du flux dans la turbomachine.

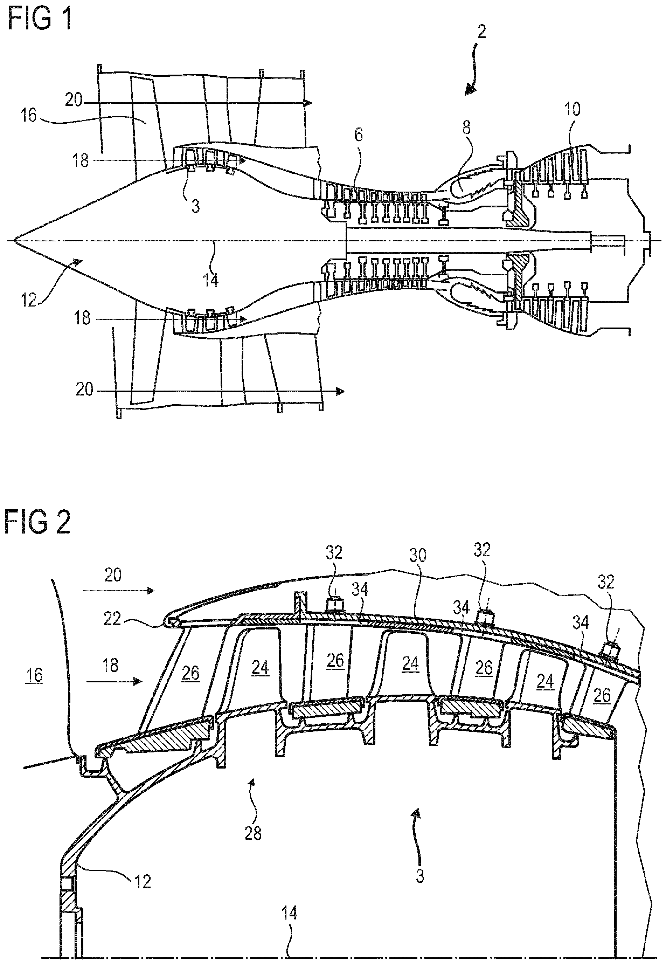

La figure 1 représente de manière simplifiée une turbomachine axiale. Il s'agit dans ce cas précis d'un turboréacteur double-flux. Le turboréacteur 2 comprend un premier niveau de compression, dit compresseur basse-pression 3, un deuxième niveau de compression, dit compresseur haute-pression 6, une chambre de combustion 8 et un ou plusieurs niveaux de turbines 10. En fonctionnement, la puissance mécanique de la turbine 10 transmise via l'arbre central jusqu'au rotor 12 met en mouvement les deux compresseurs 3 et 6. Ces derniers comportent plusieurs rangées d'aubes de rotor associées à des rangées d'aubes de stators. La rotation du rotor autour de son axe de rotation 14 permet ainsi de générer un débit d'air et de comprimer progressivement ce dernier jusqu'à l'entrée de la chambre de combustion 8. Des moyens de démultiplication peuvent augmenter la vitesse de rotation transmise aux compresseurs.

Un ventilateur d'entrée communément désigné fan ou soufflante 16 est couplé au rotor 12 et génère un flux d'air qui se divise en un flux primaire 18 traversant les différents niveaux sus mentionnés de la turbomachine, et un flux secondaire 20 traversant un conduit annulaire (partiellement représenté) le long de la machine pour ensuite rejoindre le flux primaire en sortie de turbine. Le flux secondaire peut être accéléré de sorte à générer une réaction de poussée. Les flux primaire 18 et secondaire 20 sont des flux annulaires, ils sont canalisés par le carter de la turbomachine. A cet effet, le carter présente des parois cylindriques ou viroles qui peuvent être internes et externes.

La figure 2 est une vue en coupe d'un compresseur d'une turbomachine axiale telle que celle de la figure 1. Le compresseur peut être un compresseur basse-pression 3. On peut y observer une partie du fan 16 et le bec de séparation 22 du flux primaire 18 et du flux secondaire 20. Le rotor 12 comprend plusieurs rangées d'aubes rotoriques 24, en l'occurrence trois. Le rotor 12 est formé d'un tambour 28 supportant plusieurs rangées d'aubes rotoriques 24, alternativement il pourrait être formé de la réunion de plusieurs disques supportant les aubes. Les aubes peuvent être soudées sur le tambour 28, si bien qu'il forme un rotor 12 monobloc.

Le compresseur basse pression 3 comprend plusieurs redresseurs, en l'occurrence quatre, qui contiennent chacun une rangée d'aubes statoriques 26. Les redresseurs sont associés au fan 16 ou à une rangée d'aubes rotoriques pour redresser le flux d'air, de sorte à convertir la vitesse du flux en pression statique.

Les aubes statoriques 26 s'étendent essentiellement radialement depuis un carter extérieur 30, et peuvent y être fixées et immobilisées à l'aide d'axes 32. Ces derniers peuvent être ceux de plateformes de fixation 34, ou de bases de fixation 34. Les aubes statoriques 26 sont régulièrement espacés les unes des autres, et présentent une même orientation angulaire dans le flux 18.

Les aubes rotoriques 24 et/ou statoriques 26 peuvent être composites. Chacune d'elle peut présenter une armature de renfort et une pale combinée à l'armature. Les rangées d'aubes (24, 26) peuvent être mixtes. Certaines aubes (24, 26) d'une même rangée peuvent présenter une armature et une pale d'un autre matériau, tandis que d'autres aubes (24, 26) de la rangée peuvent être en un même matériau. Chaque aube armée (24, 26) peut être réalisée à l'aide d'une armature métallique sur laquelle est co-moulée une pale composite, l'armature devenant alors un insert raidissant. Le composite peut comprendre une préforme au contact de l'armature et une résine époxydique injectée selon un procédé type RTM. Il peut également s'agir d'un mélange de fibres courtes de carbone, par exemple de longueur inférieure à 3 mm, et d'une matrice en polyétherimide (PEI), ou du PEEK, ou toute autre matrice équivalente.

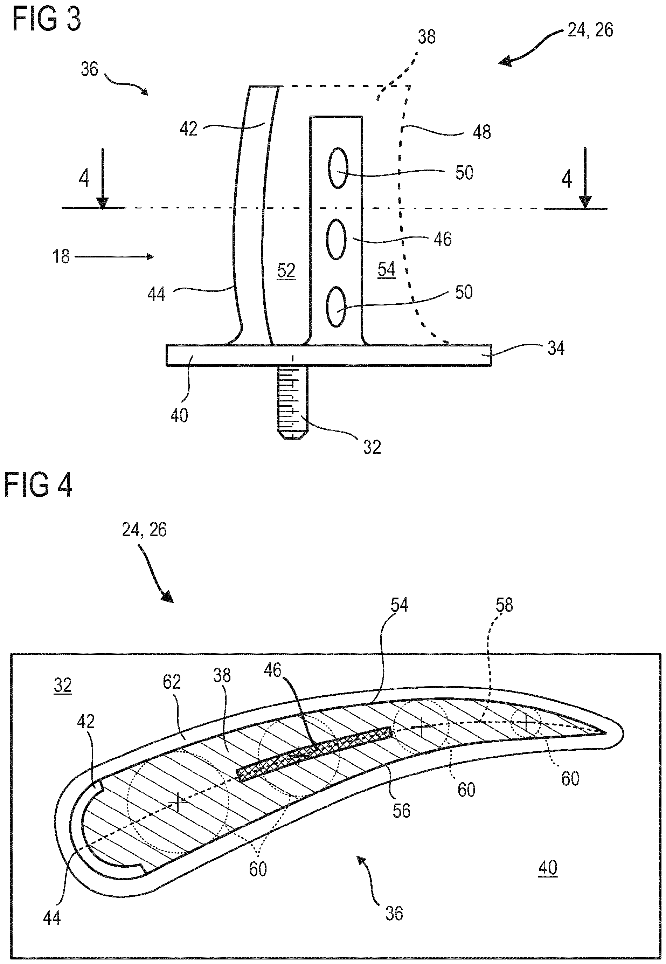

La figure 3 représente une armature 36 d'aube (24, 26) vue de profil. Le contour de la pale 38 de l'aube (24, 26) est représenté en traits pointillés. La pale 38 peut être entendue comme la portion aérodynamique de l'aube (24, 26) qui s'étend dans le flux 18 de la turbomachine, de sorte à le dévier selon la circonférence. Cela permet de comprimer le flux dans le cadre d'une aube rotorique 24 de la figure 2, ou de le redresser dans le cas d'une aube statorique 26 de la figure 2.

L'armature 36 de l'aube (24, 26) est ici monobloc. Elle présente plusieurs portions jointives ou branches, dont une base 40 d'aube, une portion amont 42 formant le bord d'attaque 44 de l'aube (24, 26), et un raidisseur 46. L'armature 36 peut être réalisée par soudage, en soudant la base 40 aux deux autres parties. Ou encore, l'armature 36 peut être moulée ou réalisée par fabrication additive à base de métal. En effectuant une coupe, il est possible de reconnaître les différentes couches du matériau d'apport, qu'il soit sous forme de poudre ou d'un fil. Les grains d'apport peuvent être reconnus.

La base 40 peut être ou comprendre une plateforme 34 d'aube (24, 26), destinée à être liée à un support. Elle peut être fixée à l'aide d'une portion de fixation 32, tel un axe filetée 32 à la manière présentée en figure 2. La base 40 peut être essentiellement d'épaisseur constante, et lie la portion amont 42 au raidisseur 46. Cette configuration est avantageuse pour réaliser une aube statorique 26 de redresseur. Suivant une alternative, la portion de fixation 32 pourrait être une queue d'aronde destinée à être insérée dans une gorge annulaire d'un rotor (non représenté). La base 40 forme la jonction entre la portion amont 42 et le raidisseur 46.

La base 40 peut présenter une portion de bord d'attaque et une portion de bord de fuite. La base 40 peut former un bloc de matière apte à être fixé à son support par soudage. Cette base 40 peut être soudée par faisceau d'électrons dans une ouverture de carter externe métallique (non représenté), ou soudée par friction orbitale sur un moignon de rotor (non représenté).

La portion amont 42 s'étend sur toute la hauteur de la pale 38 de l'aube (24, 26) pour la protéger des ingestions sur toute sa hauteur. La ligne de son bord d'attaque 44 peut former une courbe dans l'espace. Elle peut décrire un « S », et/ou une forme hélicoïdale. La ligne peut généralement être penchée selon la circonférence. La portion amont 42 s'étend sur une fraction minoritaire de la longueur de la pale 38, préférentiellement sur moins de 25%.

Le raidisseur 46 forme généralement une lame de renfort qui s'étend sur la majorité de la hauteur de l'aube (24, 26), et/ou du bord d'attaque 44. Elle s'étend sur sensiblement toute la hauteur de la pale 38, en restant néanmoins en retrait de son sommet pour économiser de la matière. Il serait toutefois envisageable qu'elle s'étende au-delà pour former une portion de fixation dans le prolongement de la pale, par exemple pour recevoir une virole. Le raidisseur 46 forme une colonne vertébrale à l'intérieur de la pale 38. De par sa présence, il augmente la raideur de la pale 38 et limite ses déformations liées à l'écoulement 18 et/ou à la force centrifuge.

Le raidisseur 46 peut présenter une forme de lame, éventuellement rectangulaire. Ses bords peuvent être adaptés au contour du bord d'attaque 44 et du bord de fuite pour optimiser la matière utilisée. Un bord peut présenter une forme sinusoïdale. Le raidisseur 46 peut être traversé par plusieurs orifices 50 répartis radialement, ce qui permet à la fois de l'alléger et d'augmenter l'ancrage entre l'armature 36 et le corps de la pale 38.

Le raidisseur 46 est disposé entre, et à distance du le bord d'attaque 44 et du bord de fuite 48. Il est disposé dans une zone centrale de la base 40, mesuré selon le sens de l'écoulement 18. L'aspect central peut s'entendre comme à distance des extrémités amont et aval. Le milieu de la base 40 peut être au niveau du raidisseur 46. En position centrale, le raidisseur 46 permet de maintenir à la fois la partie amont et la partie aval de la pale 38, ce qui permet de partager son action. Toutefois, il n'est pas indispensable qu'il soit précisément au centre puisque le comportement et la résistance de l'aube (24, 26) reposent sur les efforts variables engendrés par l'écoulement 18, et que la pale 38 bénéficie en outre d'un maintien amont de la portion amont 42. L'homme du métier pourra librement adapter la position du raidisseur 46 en fonction de ses contraintes, tout comme il pourra ajuster sa géométrie.

L'armature 36 présente un évidement 52, éventuellement un évidement central 52. Il est formé entre la portion amont 42 et le raidisseur 46. L'évidement 52 forme un dégagement, une séparation, entre la portion amont 42 et le raidisseur 46. Il y crée une brèche dans le profil de l'armature 36. Cet évidement 52 s'inscrit dans la logique d'économie de matière. Cet évidement 52 permet de créer un tronçon continu où la résistance de la pale repose essentiellement sur son matériau propre. La portion de fixation 32 peut être disposée au niveau de l'évidement 52, et/ou au niveau du raidisseur 46. Cette configuration permet de raidir la jonction formée par la base 40. L'expression « au niveau » peut être selon la direction de l'écoulement, par exemple du flux primaire 18.

L'armature 36 peut également montrer un évidement en aval 54, entre le raidisseur et le bord de fuite 48. Cette zone est avantageusement comblée par le matériau du corps de la pale 38. De fait, le tronçon de la pale 38 formant le bord de fuite 48 bénéficie de la raideur du raidisseur 46, tout en restant léger.

La figure 4 représente une coupe de l'aube (24, 26) au niveau de l'axe 4-4 tracé sur la figure 3. A nouveau, il peut s'agir d'une aube rotorique 24 ou d'une aube statorique telles que celles détaillées en figures 2 puis en figure 3.

La portion amont 42 peut être généralement profilée. Elle peut former un bouclier, un plaquage. Elle peut montrer une forme de tôle. Elle peut présenter une forme globale de gouttière. Son profil peut être arqué ou en flèche. Ce profil peut présenter deux ailes, une du côté extrados 54, l'autre du côté intrados 56. Le bord d'attaque 44 de l'aube (24, 26) peut être sur une face amont de la portion amont 42. La face aval du profil décrit une gorge qui est recouverte par le corps de la pale 38. Cette face peut être tapissée d'aspérités, telles des cavités ou des picots pour accroître l'ancrage de la pale. L'homme du métier est d'ailleurs encouragé à optimiser la portion amont 42 pour soigner l'encastrement de la pale 38. La même démarche s'applique au raidisseur 46 de l'armature 36.

Le profil de l'aube (24, 26) est majoritairement formé par le corps de la pale 38, l'armature 36 comble ici une part minoritaire, par exemple inférieure ou égale à 25%, préférentiellement inférieure ou égale à 10% de la surface du profil. Ceci peut s'appliquer à tout profil de l'aube (24, 26). Le raidisseur 46 est implanté à cœur de cette pale 38, à distance de la surface intrados 56 et de la surface extrados 54. Son épaisseur est inférieure à la moitié de l'épaisseur moyenne de la pale 38. Il est isolé du flux, si bien que la surface intrados 56 et la surface extrados 54 sont essentiellement lisses pour un meilleur écoulement. Le profil du raidisseur 46 peut être généralement rectangulaire, éventuellement sensiblement cintré. Cela lui permet de suivre la courbure de la pale 38, et également de montrer une raideur accrue contre un basculement de l'extrémité de la pale 38. Cette action est donc complémentaire de la forme de la portion amont 42.

Le corps de la pale 38 est formé par un empilement de profils aérodynamiques dont l'un est ici représenté en coupe. Chaque profil aérodynamique comporte une ligne de cambrure moyenne 58, cette ligne 58 étant formée par la réunion des centres des cercles inscrits 60 dans le profil. Avantageusement, les ou la majorité des lignes de cambrure moyenne 58 passent à l'intérieur du raidisseur 46 ; le traversent. Ainsi, la raideur de l'agencement est accrue avec un poids réduit.

La base 40 montre ici une forme de plateforme rectangulaire, cependant toute autre forme est envisageable. La jonction entre la pale 38 et la base 40 présente un rayon de raccordement périmétrique 62 formant une transition entre la plateforme 32 et un profil d'aube. Naturellement, la base pourrait uniquement être délimitée par le rayon de raccordement 62. Dans ce cas, elle pourrait être un pied d'aube en forme de profil d'aube avec un côté intrados incurvé, un côté extrados bombé.

## Revendications

1. Armature (36) d'aube (24, 26) avec bord d'attaque (44) de turbomachine (2), notamment de compresseur (3 ; 6) de turbomachine (2), l'armature (36) étant monobloc et comprenant :
une base (40) d'aube destinée à être liée à un support de la turbomachine,
une portion amont (42) s'étendant depuis la base (40) et formant le bord d'attaque (44) de l'aube (24, 26);
**caractérisée en ce qu'**elle comprend en outre
un raidisseur (46) situé en position centrale de la base (40),
l'armature (36) présentant un évidement (52) qui sépare la portion amont (42) du raidisseur (46) et qui s'étend depuis la base (40) sur la hauteur dudit raidisseur (46).

2. Armature (36) selon la revendication 1, **caractérisée en ce que** le raidisseur (46) s'étend depuis la base (40) sur la majorité de la hauteur de la portion amont (42), préférentiellement sur la majorité de la hauteur de l'armature (36).

3. Armature (36) selon l'une des revendications 1 à 2, **caractérisée en ce que** le raidisseur (46) présente une pluralité d'orifices traversants (50), les orifices (50) étant préférentiellement répartis sur sa hauteur.

4. Armature (36) selon l'une des revendications 1 à 3, **caractérisée en ce que** le raidisseur (46) forme une lame, éventuellement de largeur constante.

5. Armature (36) selon l'une des revendications 1 à 4, **caractérisée en ce que** la base (40) est ou comprend une plateforme de fixation (32), qui comprend éventuellement une portion de fixation (32) s'étendant depuis la base (40) vers l'opposé du raidisseur (46) suivant la direction radiale de la turbomachine.

6. Armature (36) selon l'une des revendications 1 à 5, **caractérisée en ce que** la base (40) présente une extrémité aval, le raidisseur (46) étant à distance de ladite extrémité aval.

7. Armature (36) selon l'une des revendications 1 à 6, **caractérisée en ce qu'**elle est réalisée en métal, préférentiellement en titane, plus préférentiellement réalisée par fabrication additive à base de métal, notamment en poudre.

8. Aube (24, 26) de turbomachine (2), notamment une aube (24, 26) de compresseur (3 ; 6), l'aube (24, 26) comprenant une armature (36), **caractérisée en ce que** l'armature est conforme à l'une des revendications 1 à 7, préférentiellement l'aube (24, 26) comprend une pale (38) destinée à dévier circonférentiellement un flux (18) de la turbomachine (2), la pale (38) comprenant un corps enveloppant le raidisseur (46).

9. Aube (24, 26) selon la revendication 8, **caractérisée en ce que** le corps comprend un matériau polymère et/ou un matériau composite à matrice organique.

10. Aube (24, 26) selon l'une des revendications 8 à 9, **caractérisée en ce qu'**elle comprend un bord de fuite (48), une surface intrados (56) et une surface extrados (54) qui s'étendent du bord d'attaque (44) au bord de fuite (48), le corps comprenant une enveloppe formant la surface intrados (56) et la surface extrados (54), le bord de fuite (48) étant éventuellement formé par ledit corps.

11. Aube (24, 26) selon l'une des revendications 8 à 10, **caractérisée en ce que** le corps forme un bloc amont isolant la portion amont (42) du raidisseur (46), ledit bloc étant continu sur toute la hauteur de la pale (38).

12. Aube (24, 26) selon l'une des revendications 8 à 11, **caractérisée en ce que** la portion amont (42) présente une gorge tournée vers le raidisseur (46), la gorge étant remplie par le corps.

13. Aube (24, 26) selon l'une des revendications 8 à 12, **caractérisée en ce que** la portion amont (42) forme essentiellement une feuille d'épaisseur constante, la feuille présentant une face amont formant le bord d'attaque (44), et une face aval recouverte par le corps.

14. Turbomachine (2), notamment une turbomachine axiale, comprenant une aube (24, 26) avec une armature (36), **caractérisée en ce que** l'armature (36) est conforme à l'une des revendications 1 à 7, et/ou l'aube (24, 26) est conforme à l'une des revendications 8 à 13, préférentiellement la turbomachine (2) comprend un compresseur (3 ; 6) avec une aube (24, 26) conforme à l'une des revendications 8 à 13.

15. Turbomachine (2) selon la revendication 14, **caractérisée en ce qu'**elle comprend un rotor (12), la base (40) de l'aube (24) étant liée audit rotor (12), la base (40) étant éventuellement soudée audit rotor (12).

## Patentansprüche

1. Ausrüstungsteil (36) eines Schaufelblattes (24, 26) mit einer Vorderkante (44) einer Turbomaschine (2), insbesondere eines Kompressors (3; 6) einer Turbomaschine (2), wobei das Ausrüstungsteil (36) einstückig ist und umfasst:
eine Schaufelblattbasis (40), die dazu vorgesehen ist, mit einem Träger der Turbomaschine verbunden zu sein;
ein stromaufwärtiges Teil (42), das sich von der Basis (40) aus erstreckt und die Vorderkante (44) des Schaufelblattes (24, 26) bildet;
**dadurch gekennzeichnet, dass** es außerdem
einen Versteifer (46) umfasst, der an einer zentralen Position der Basis (40) gelegen ist,
wobei das Ausrüstungsteil (36) eine Ausnehmung (52) hat, die das stromaufwärtige Teil (42) von dem Versteifer (46) trennt und die sich von der Basis (40) aus entlang der Höhe des besagten Versteifers (46) erstreckt.

2. Ausrüstungsteil (36) gemäß Anspruch 1, **gekennzeichnet dadurch, dass** sich der Versteifer (46) von der Basis (40) aus über den Großteil der Höhe des stromaufwärtigen Teils (42) erstreckt, vorzugsweise über den Großteil der Höhe des Ausrüstungsteil (36).

3. Ausrüstungsteil (36) gemäß einem der Ansprüche 1 oder 2, **gekennzeichnet dadurch, dass** der Versteifer (46) eine Mehrzahl von durchgehenden Öffnungen (50) hat, wobei die Öffnungen (50) vorzugsweise über seine Höhe verteilt sind.

4. Ausrüstungsteil (36) gemäß einem der Ansprüche 1 bis 3, **gekennzeichnet dadurch, dass** der Versteifer (46) eine Klinge bildet, möglicherweise mit einer konstanten Breite.

5. Ausrüstungsteil (36) gemäß einem der Ansprüche 1 bis 4, **gekennzeichnet dadurch, dass** die Basis (40) eine Befestigungsplattform (32) ist oder umfasst, die möglicherweise ein Befestigungsteil (32) umfasst, das sich von der Basis (40) entgegengesetzt zum Versteifer (46) streckt und der radialen Richtung der Turbomaschine folgt.

6. Ausrüstungsteil (36) gemäß einem der Ansprüche 1 bis 5, **gekennzeichnet dadurch, dass** die Basis (40) ein stromabwärtiges Ende hat, wobei der Versteifer (46) von dem besagten stromabwärtigen Ende beanstandet ist.

7. Ausrüstungsteil (36) gemäß einem der Ansprüche 1 bis 6, **gekennzeichnet dadurch, dass** es aus einem Metall hergestellt ist, vorzugsweise aus Titan, noch bevorzugter durch additive Fertigung auf Basis eines Metalls, insbesondere aus Pulver.

8. Schaufelblatt (24, 26) einer Turbomaschine (2), insbesondere ein Schaufelblatt (24, 26) eines Kompressors (3; 6), wobei das Schaufelblatt (24, 26) ein Ausrüstungsteil (36) umfasst, **dadurch gekennzeichnet, dass** das Ausrüstungsteil gemäß einem der Ansprüche 1 bis 7 ist, wobei das Schaufelblatt (24, 26) vorzugsweise ein Blatt (38) umfasst, das dazu vorgesehen ist, einen Fluss (18) der Turbomaschine (2) in Umfangsrichtung umzulenken, wobei das Blatt (38) einen Körper umfasst, der den Versteifer (46) umhüllt.

9. Schaufelblatt (24, 26) gemäß Anspruch 8, **gekennzeichnet dadurch, dass** der Körper ein Polymermaterial und/oder ein Kompositmaterial mit einer organischen Matrix umfasst.

10. Schaufelblatt (24, 26) gemäß einem der Ansprüche 8 bis 9, **gekennzeichnet dadurch, dass** es eine Hinterkante (48), eine innenseitige Oberfläche (56) und eine außenseitige Oberfläche (54) umfasst, die sich von der Vorderkante (44) zu der Hinterkante (48) erstrecken, wobei der Körper eine Umhüllung umfasst, der die innenseitige Oberfläche (56) und die außenseitige Oberfläche (54) umfasst, wobei die Hinterkante (48) möglicherweise von dem besagten Körper gebildet ist.

11. Schaufelblatt (24, 26) gemäß einem der Ansprüche 8 bis 10, **gekennzeichnet dadurch**, der Körper einen stromaufwärtigen Block bildet, der das stromaufwärtige Teil (42) von dem Versteifer (46) isoliert, wobei der besagte Block kontinuierlich über die gesamte Höhe des Blattes (38) ist.

12. Schaufelblatt (24, 26) gemäß einem der Ansprüche 8 bis 11, **gekennzeichnet dadurch**, das stromaufwärtige Teil (42) eine Rille hat, die zu dem Versteifer (46) hin gedreht ist, wobei die Rille durch den Körper gefüllt ist.

13. Schaufelblatt (24, 26) gemäß einem der Ansprüche 8 bis 12, **gekennzeichnet dadurch**, das stromaufwärtige Teil (42) im Wesentlichen eine Folie mit einer konstanten Dicke bildet, wobei die Folie eine stromaufwärtige Seite hat, die die Vorderkante (44) bildet, und eine stromabwärtige Seite, die von dem Körper bedeckt ist.

14. Turbomaschine (2), insbesondere eine axiale Turbomaschine, umfassend ein Schaufelblatt (24, 26) mit einem Ausrüstungsteil (36), **gekennzeichnet dadurch, dass** das Ausrüstungsteil (36) gemäß einem der Ansprüche 1 bis 7 ist und/oder dass das Schaufelblatt (24, 26) gemäß einem der Ansprüche 8 bis 13 ist, wobei die Turbomaschine (2) vorzugsweise einen Kompressor (3; 6) mit einem Schaufelblatt (24, 26) gemäß einem der Ansprüche 8 bis 13 umfasst.

15. Turbomaschine (2) gemäß Anspruch 14, gekennzeichnet, dass sie einen Rotor (12) umfasst, wobei die Basis (40) des Schaufelblattes (24) mit dem besagten Rotor (12) verbunden ist, wobei die Basis (40) möglicherweise mit dem besagten Rotor (12) verschweißt ist.

## Claims

1. Frame (36) of a vane (24, 26) with leading edge (44) of a turbomachine (2), notably of a compressor (3 ; 6) of a turbomachine (2), the frame (36) being single-piece and including:
a base (40) of a vane intended to be connected to a support of the turbomachine,
an upstream portion (42) extending from the base (40) and forming the leading edge (44) of the vane (24, 26);
**characterized in that** it further includes
a stiffener (46) situated at a central position of the base (40),
the frame (36) having a cut-out (52), which separates the upstream portion (42) from the stiffener (46) and which extends from the base (40) along the height of said stiffener (46).

2. Frame (36) according to claim 1, **characterized in that** the stiffener (46) extends from the base (40) along more than half of the height of the upstream portion (42), preferably along more than half of the height of the frame (36).

3. Frame (36) according to either of claims 1 and 2, **characterized in that** the stiffener (46) has a plurality of through-orifices (50), the orifices (50) being preferably distributed along its height.

4. Frame (36) according to one of claims 1 to 3, **characterized in that** the stiffener (46) forms a strip, possibly of a constant width.

5. Frame (36) according to one of claims 1 to 4, **characterized in that** the base (40) is or includes a fastening platform (32), which possibly includes a fastening portion (32) extending from the base (40) to opposite the stiffener (46) along the radial direction of the turbomachine.

6. Frame (36) according to one of claims 1 to 5, **characterized in that** the base (40) has a downstream extremity, the stiffener (46) being remote from said downstream extremity.

7. Frame (36) according to one of claims 1 to 6, **characterized in that** it is produced from metal, preferably titanium, more preferably produced by additive manufacturing based on metal, preferably based on metal powder.

8. Vane (24, 26) of a turbomachine (2), notably a vane (24, 26) of a compressor (3 ; 6), the vane (24, 26) including a frame (36), **characterized in that** the frame is according to one of claims 1 to 7, the vane (24, 26) preferably includes a blade (38) intended to divert circumferentially a flow (18) of the turbomachine (2), the blade (38) including a body enveloping the stiffener (46).

9. Vane (24, 26) according to either of claims 8, **characterized in that** the body includes a polymer material and/or a composite material with an organic matrix.

10. Vane (24, 26) according to one of claims 8 to 9, **characterized in that** it includes a trailing edge (48), an intrados surface (56) and an extrados surface (54), which extend from the leading edge (44) to the trailing edge (48), the body including an envelope forming the intrados surface (56) and the extrados surface (54), the trailing edge (48) possibly being formed by said body.

11. Vane (24, 26) according to one of claims 8 to 10, **characterized in that** the body forms an upstream block isolating the upstream portion (42) from the stiffener (46), said block being continuous along the entire height of the blade (38).

12. Vane (24, 26) according to one of claims 8 to 11, **characterized in that** the upstream portion (42) has a groove turned towards the stiffener (46), the groove being filled by the body.

13. Vane (24, 26) according to one of claims 8 to 12, **characterized in that** the upstream portion (42) essentially forms a foil of a constant thickness, the foil having an upstream face forming the leading edge (44) and a downstream face covered by the body.

14. Turbomachine (2), preferably an axial turbomachine, including a vane (24, 26) with a frame (36), **characterized in that** the frame (36) is according to one of claims 1 to 7, and/or the vane (24, 26) according to one of claims 8 to 13, the turbomachine (2) preferably includes a compressor (3 ; 6) with a vane (24, 26) according to one of claims 8 to 13.

15. Turbomachine (2) according to claim 14, **characterized in that** it includes a rotor (12), the base (40) of the vane (24) being connected to said rotor (12), the base (40) optionally being welded to said rotor (12).
